(19) Europäisches Patentamt
European Patent Office
Office européen des brevets

(11) **EP 3 616 179 B1**

(12) **FASCICULE DE BREVET EUROPEEN**

(45) Date de publication et mention
de la délivrance du brevet:
**27.01.2021 Bulletin 2021/04**

(51) Int Cl.:
***G08G 1/01*** *(2006.01)*      ***H04W 4/021*** *(2018.01)*
***H04W 4/44*** *(2018.01)*

(21) Numéro de dépôt: **18715232.7**

(22) Date de dépôt: **23.03.2018**

(86) Numéro de dépôt international:
**PCT/FR2018/050718**

(87) Numéro de publication internationale:
**WO 2018/197766 (01.11.2018 Gazette 2018/44)**

(54) **PROCÉDÉ ET DISPOSITIF DE CONTRÔLE DE LA TRANSMISSION DE DONNÉES D'UN VÉHICULE À UN ÉQUIPEMENT DE COMMUNICATION**

VERFAHREN UND VORRICHTUNG ZUR STEUERUNG DER ÜBERTRAGUNG VON DATEN VON EINEM FAHRZEUG ZU KOMMUNIKATIONSAUSRÜSTUNG

METHOD AND DEVICE FOR CONTROLLING THE TRANSMISSION OF DATA FROM A VEHICLE TO COMMUNICATION EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2017 FR 1753710**

(43) Date de publication de la demande:
**04.03.2020 Bulletin 2020/10**

(73) Titulaire: **PSA Automobiles SA
78300 Poissy (FR)**

(72) Inventeur: **PERRIER, Lionel
78000 Versailles (FR)**

(56) Documents cités:
**US-A1- 2008 162 034     US-A1- 2013 031 047
US-B1- 9 558 664**

**Description**

L'invention concerne les véhicules qui sont équipés d'un module de communication pouvant établir des communications par voie d'ondes (ou sans fil) avec au moins un réseau de communication, et plus précisément le contrôle de la transmission par voie d'ondes de données de tels véhicules à au moins un équipement de communication.

Certains véhicules, généralement de type automobile, comprennent un module de communication chargé, notamment, de transmettre à un équipement de communication (comme par exemple un serveur), éventuellement périodiquement, des données qui le concernent et/ou qui concernent son environnement. Généralement ces données du véhicule qui sont transmises sont une partie au moins de celles qui circulent dans son réseau de communication embarqué (éventuellement de type multiplexé), auquel sont connectés la plupart de ses équipements électroniques.

Ces données transmises par les véhicules sont stockées temporairement afin d'être analysées pour en déduire de nombreuses informations sur les fonctionnements des véhicules, éventuellement en fonction de leur environnement (notamment le climat), et/ou sur les voies de circulation empruntées par les véhicules (notamment les trafics en fonction des jours et/ou horaires) et/ou sur les habitudes ou préférences des conducteurs.

La quantité des données transmises par les véhicules étant très importante, elle nécessite des mémoires de stockage de très grande capacité, et des capacités d'analyse et de traitement de données très importantes, ce qui s'avère très onéreux. En outre, la transmission de ces données de véhicules consomme une importante bande passante des réseaux de communication sans fil, ce qui peut, parfois et dans certaines zones, limiter les communications par voie d'ondes de tiers.

Il s'avère que bon nombre de ces données sont récurrentes et donc redondantes pour un même véhicule. C'est par exemple le cas des données qui sont enregistrées sur un même trajet emprunté fréquemment pour un véhicule donné (par exemple entre le domicile de son conducteur et le lieu de travail de ce dernier ou une zone de stationnement proche d'un moyen de transport utilisé par son conducteur pour joindre son lieu de travail). Par conséquent, de très nombreuses données de véhicules sont transmises, stockées, analysées et traitées inutilement.

Le document brevet CN105138779 décrit une méthode destinée à optimiser certaines données d'un véhicule en fonction de chaque trajet qu'il emprunte afin de ne transmettre que les données optimisées de chaque trajet. Hélas, cela ne permet de réduire que très légèrement la quantité des données transmises, et n'évite pas la transmission de données redondantes.

On connait par le document US2013/031047 une architecture qui identifie et apprend un comportement d'utilisateur répété (habitudes) relatif à des itinéraires de déplacement et à des points d'intérêt. Une fois apprises, les habitudes d'un individu peuvent être utilisées pour rendre un algorithme plus efficace et, par conséquent, pour rendre l'expérience d'utilisateur d'une application plus efficace et plus appréciable.

On connait par le document US2008/162034 un système et un procédé de génération automatique d'un ensemble de géo-barrières destinées à être utilisées par un dispositif télématique monté sur une unité mobile pour suivre cette unité mobile entre un emplacement de départ et un emplacement d'arrivée, l'ensemble de géo-barrières étant sélectionné à partir d'une bibliothèque de géo-barrières sur la base d'un trajet prévu entre l'emplacement de départ et l'emplacement d'arrivée et selon un ou plusieurs critères.

L'invention a donc notamment pour but d'améliorer la situation.

Elle propose à cet effet un procédé, dédié au contrôle de la transmission par voie d'ondes de données d'un véhicule à un équipement de communication.

Ce procédé de contrôle se caractérise par le fait qu'il comprend :

- une première étape dans laquelle on détermine dans le véhicule pendant une durée choisie un trajet de référence emprunté le plus fréquemment, puis on transmet par voie d'ondes, du véhicule vers l'équipement de communication, au moins une définition de ce trajet de référence, et

- une seconde étape dans laquelle on compare dans le véhicule chaque définition d'un nouveau trajet emprunté par ce dernier à la définition du trajet de référence, et en cas de différence on transmet par voie d'ondes, du véhicule vers l'équipement de communication, la définition du nouveau trajet avec des données prédéfinies du véhicule enregistrées pendant ce nouveau trajet, tandis qu'en cas d'identité on transmet par voie d'ondes, du véhicule vers l'équipement de communication, une première information représentative du fait que le trajet de référence a été une nouvelle fois emprunté et on supprime dans le véhicule les données prédéfinies du véhicule enregistrées pendant le trajet de référence une nouvelle fois emprunté.

Ainsi, on peut réduire très notablement la quantité de données d'un véhicule qui est transmise par voie d'ondes à un équipement de communication distant (comme par exemple un serveur).

Le procédé de contrôle selon l'invention peut comporter d'autres caractéristiques qui peuvent être prises séparément ou en combinaison, et notamment :

- la première information peut seulement signaler que le trajet de référence a été une nouvelle fois emprunté ;
- dans la seconde étape on peut également déterminer une seconde information représentative d'un taux de répétabilité mis à jour chaque fois que le trajet de référence a été de nouveau emprunté ; ➢ le taux de répétabilité peut être égal à un rapport a/(a + b), où a est égal au produit du nombre de fois où le trajet de référence a été emprunté par la longueur de ce dernier, et b est égal à la somme de a et de la somme du nombre de fois où chaque trajet différent du trajet de référence a été emprunté par la longueur de ce trajet différent ; ➢ dans la seconde étape, lorsque l'équipement de communication reçoit la seconde information du véhicule, il peut stocker cette dernière en correspondance d'un identifiant du véhicule ;

- chaque définition d'un trajet peut comprendre une position géographique de début du trajet, une position géographique de fin du trajet, une longueur du trajet, et une vitesse moyenne du véhicule sur ce trajet ;

- la durée choisie peut être comprise entre deux semaines et quatre semaines. Par exemple, la durée choisie peut être égale à trois semaines.

L'invention propose également un dispositif destiné à contrôler la transmission par voie d'ondes de données d'un véhicule à un équipement de communication.

Ce dispositif de contrôle se caractérise par le fait qu'il comprend :

- des moyens d'analyse agencés pour déterminer dans le véhicule pendant une durée choisie un trajet de référence emprunté le plus fréquemment, et pour déclencher la transmission par voie d'ondes, du véhicule vers l'équipement de communication, d'au moins une définition de ce trajet de référence, et

- des moyens de contrôle agencés pour comparer dans le véhicule chaque définition d'un nouveau trajet emprunté par ce dernier à la définition du trajet de référence, et en cas de différence pour déclencher la transmission par voie d'ondes, du véhicule vers l'équipement de communication, de la définition du nouveau trajet avec des données prédéfinies du véhicule enregistrées pendant ce nouveau trajet, et en cas d'identité pour déclencher la transmission par voie d'ondes, du véhicule vers l'équipement de communication, d'une première information représentative du fait que le trajet de référence a été une nouvelle fois emprunté, et la suppression dans le véhicule des données prédéfinies du véhicule enregistrées pendant le trajet de référence une nouvelle fois emprunté.

L'invention propose également un véhicule, éventuellement de type automobile, et comprenant un dispositif de contrôle du type de celui présenté ci-avant.

D'autres caractéristiques et avantages de l'invention apparaîtront à l'examen de la description détaillée ci-après, et des dessins annexés, sur lesquels :

- la figure 1 illustre schématiquement, dans une vue en perspective, un exemple de véhicule comprenant un dispositif de contrôle selon l'invention et un module de communication sans fil connecté à un réseau de communication sans fil, et

- la figure 2 illustre un exemple d'algorithme mettant en œuvre un procédé de contrôle selon l'invention.

L'invention a notamment pour but de proposer un procédé de contrôle, et un dispositif de contrôle associé, destinés à permettre le contrôle de la transmission par voie d'ondes de données d'un véhicule V à au moins un équipement de communication EC.

Dans ce qui suit, on considère, à titre d'exemple non limitatif, que le véhicule V est de type automobile. Il s'agit, par exemple, d'une voiture. Mais l'invention n'est pas limitée à ce type de véhicule. Elle concerne en effet tout type de véhicule, terrestre, maritime (ou fluvial) ou aérien, dès lors qu'il comprend un module de communication sans fil.

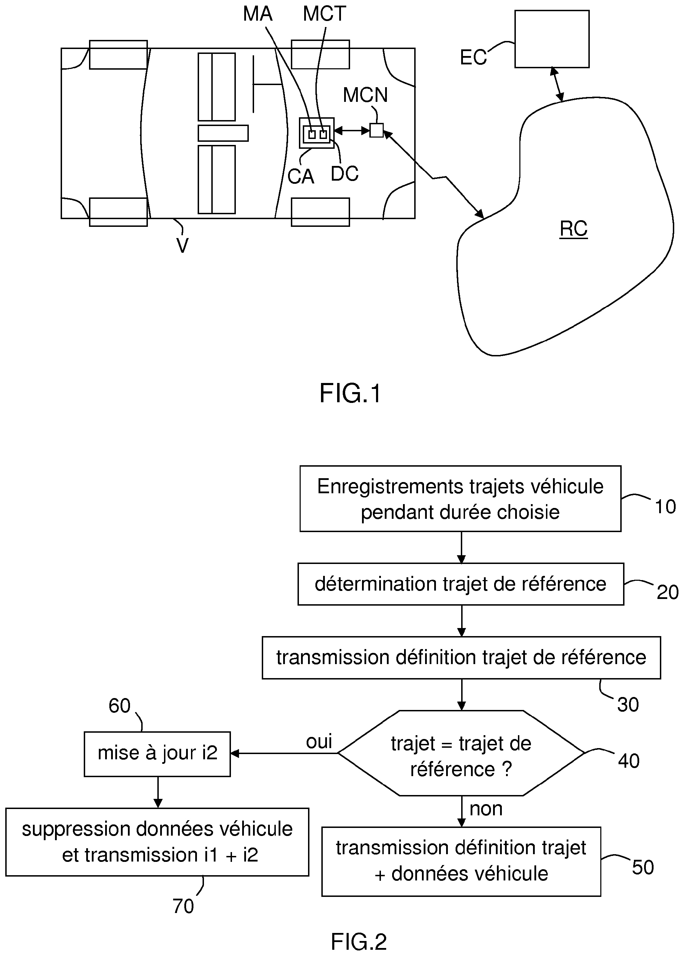

On a schématiquement représenté sur la figure 1 un exemple de véhicule V comprenant un dispositif de contrôle DC selon l'invention et un module de communication sans fil MCN pouvant se connecter à un réseau de communication sans fil RC permettant l'accès à un équipement de communication EC chargé de stocker, analyser et traiter des données de véhicules.

Par exemple, cet équipement de communication EC peut être un serveur.

Comme indiqué plus haut, l'invention propose notamment de mettre en œuvre un procédé destiné à contrôler la transmission par voie d'ondes de données d'un véhicule V à au moins un équipement de communication EC. Cette mise en œuvre peut se faire au moyen, notamment, de dispositifs de contrôle DC qui sont installés respectivement dans les véhicules V qui sont agencés de manière à transmettre, éventuellement périodiquement, certaines de leurs données à l'équipement de communication EC.

Par exemple, ces données du véhicule V, qui sont transmises, concernent le fonctionnement et/ou l'environnement de ce dernier (V). A titre d'exemple, ces données sont une partie au moins de celles qui circulent dans le réseau de communication (éventuellement de type multiplexé) qui est embarqué dans le véhicule V et auquel sont connectés la plupart des équipements électroniques de ce dernier (V).

Dans l'exemple illustré non limitativement sur la figure 1, le dispositif de contrôle DC du véhicule V est installé dans un calculateur CA qui peut, éventuellement, assurer au moins une autre fonction au sein de ce véhicule V. Ce calculateur CA peut, par exemple, être un boîtier télématique (éventuellement celui connu sous l'acronyme BSRF (« Boitier de Servitude Radio Fréquence »)). Mais cela n'est pas obligatoire. En effet, le dispositif de contrôle DC pourrait être agencé sous la forme d'un calculateur dédié au contrôle de la transmission par voie d'ondes de données du véhicule V. Par conséquent, un dispositif de contrôle DC, selon l'invention, peut être réalisé sous la forme de modules logiciels (ou informatiques (ou encore « software »)), ou bien d'une combinaison de circuits électroniques (ou « hardware ») et de modules logiciels.

Le procédé (de contrôle), selon l'invention, comprend des première et seconde étapes.

La première étape est déclenchée au début de l'utilisation du véhicule V par un conducteur, par exemple lors de sa première mise en circulation. Ce déclenchement peut éventuellement se faire par sélection d'un menu affiché sur un écran (par exemple celui du combiné central).

Durant la première étape du procédé, on commence par déterminer dans le véhicule V pendant une durée choisie un trajet de référence emprunté le plus fréquemment. Cette détermination est réalisée par des moyens d'analyse MA que comprend le dispositif de contrôle DC. Elle se fait en enregistrant la définition de chaque trajet emprunté par le véhicule V pendant la durée choisie, puis comparant entre elles toutes ces définitions.

Par exemple, et non limitativement, la durée choisie peut être comprise entre deux semaines et quatre semaines. A titre d'exemple purement illustratif, cette durée choisie peut être égale à trois semaines. Mais, lorsque le véhicule V est peu utilisé, la durée choisie peut être fonction d'un nombre minimal de trajets effectués.

Egalement par exemple, et non limitativement, chaque définition d'un trajet enregistrée peut comprendre la position géographique du début de ce trajet, la position géographique de fin de ce trajet, la longueur de ce trajet, et la vitesse moyenne du véhicule V sur ce trajet. Cette définition comprend ici quatre paramètres. Mais elle pourrait n'en comporter que deux ou trois ou encore plus de quatre (par exemple cinq ou six).

On notera qu'il est préférable de considérer qu'un trajet est identique à un autre trajet lorsqu'ils ont une même définition avec une tolérance d'écart de x% sur l'un au moins des paramètres constituant la définition. Cela résulte du fait qu'il peut y avoir une légère variabilité d'au moins un paramètre pour un même trajet (ainsi, deux trajets peuvent être identiques en ayant des positions géographiques de début ou de fin légèrement différentes, par exemple du fait de lieux de stationnement légèrement différents, ou en ayant des longueurs légèrement différentes, par exemple du fait de travaux ou d'une livraison ou encore d'une déviation).

Cette tolérance d'écart de x% peut être éventuellement ajustable.

Fréquemment, le trajet de référence se trouve être le trajet entre le domicile du conducteur et le lieu de travail de ce dernier ou une zone de stationnement proche d'un moyen de transport utilisé par le conducteur pour joindre son lieu de travail), et inversement.

On notera également que pendant la durée choisie de détermination du trajet de référence, chaque fois qu'un trajet du véhicule V est terminé, on transmet par voie d'ondes, de ce véhicule V (et plus précisément de son module de communication MCN) vers l'équipement de communication EC, la définition de ce trajet ainsi que des données prédéfinies du véhicule V qui ont été enregistrées pendant ce nouveau trajet.

Ensuite, dans la première étape, une fois que la définition du trajet de référence est disponible, on transmet par voie d'ondes, du véhicule V (et plus précisément de son module de communication MCN) vers l'équipement de communication EC, au moins cette définition du trajet de référence qui vient d'être déterminée. Cette transmission est déclenchée par les moyens d'analyse MA du dispositif de contrôle DC, et réalisée par le module de communication MCN du véhicule V.

Durant la seconde étape du procédé, on compare dans le véhicule V chaque définition d'un nouveau trajet emprunté par ce dernier (V) à la définition du trajet de référence qui a été précédemment déterminée dans la première étape. Cette comparaison de définitions est réalisée par des moyens de contrôle MCT que comprend le dispositif de contrôle DC, en tenant compte des éventuelles tolérances d'écart sur les paramètres des définitions.

En cas de différence entre les définitions du nouveau trajet et du trajet de référence, on transmet par voie d'ondes, du véhicule V vers l'équipement de communication EC, la définition du nouveau trajet avec des données prédéfinies du véhicule V qui ont été enregistrées pendant ce nouveau trajet.

A l'inverse, en cas d'identité entre les définitions du nouveau trajet et du trajet de référence, on transmet par voie d'ondes, du véhicule V vers l'équipement de communication EC, une première information i1 qui est représentative du fait que le trajet de référence a été une nouvelle fois emprunté, et on supprime dans le véhicule V les données prédéfinies du véhicule V qui ont été enregistrées pendant le trajet de référence une nouvelle fois emprunté.

On comprendra que ce sont les moyens de contrôle MCT du dispositif de contrôle DC qui déclenchent l'une ou l'autre des transmissions en fonction du résultat de la comparaison de définitions, et que la transmission est réalisée par le module de communication MCN du véhicule V.

Grâce à l'invention, seules sont transmises à l'équipement de communication EC les données prédéfinies du véhicule V qui ont été enregistrées pendant un trajet différent du trajet de référence. On considère en effet qu'il serait redondant, et donc inutile, de retransmettre les données prédéfinies du véhicule V enregistrées pendant chaque trajet de référence nouvellement emprunté, alors même que ces données ont déjà été transmises. A titre d'exemple, environ 70% à 80% des trajets effectuées par une personne travaillant toujours au même endroit sont répétitifs.

L'invention permet donc de réduire très notablement la quantité de données du véhicule V qui est transmise à l'équipement de communication EC, et aussi de réduire la capacité des mémoires de stockage et les capacités d'analyse et de traitement de données d'au moins l'équipement de communication EC.

En outre, cela permet de réduire très notablement la bande passante des réseaux de communication sans fil qui est utilisée pour transmettre les données des véhicules, et le coût de remontée des données.

Par exemple, la première information i1 peut signaler que le trajet de référence a été une nouvelle fois emprunté. En variante, la première information i1 pourrait être la dernière mise à jour du nombre total de fois où le trajet de référence a été emprunté par le véhicule V.

On notera que dans la seconde étape du procédé, on peut déterminer une seconde information i2 représentative d'un taux de répétabilité tr mis à jour chaque fois que le trajet de référence a été de nouveau emprunté.

A titre d'exemple non limitatif, le taux de répétabilité tr peut être égal à un rapport a/(a + b), où a est égal au produit du nombre de fois $n_{TR}$ où le trajet de référence a été emprunté par la longueur $l_{TR}$ de ce dernier, et b est égal à la somme de a et de la somme du nombre de fois $n_{Tj}$ où chaque trajet différent du trajet de référence a été emprunté par la longueur $l_{Tj}$ de ce trajet différent. On a donc ici tr = $(n_{TR}*l_{TR})$ / $[(n_{TR}*l_{TR}) + \Sigma_j(n_{Tj}*l_{Tj})]$.

En variante, le taux de répétabilité tr pourrait être égal au rapport a'/(a' + b'), où a' est égal au nombre de fois $n_{TR}$ où le trajet de référence a été emprunté, et b' est égal à la somme de a et de la somme du nombre de fois $n_{Tj}$ où chaque trajet différent du trajet de référence a été emprunté. On a alors

$$tr = n_{TR} / [n_{TR} + \Sigma_j n_{Tj}].$$

Cette seconde information i2 peut, par exemple, être déterminée par les moyens de contrôle MCT du dispositif de contrôle DC du véhicule V, puis transmise à l'équipement de communication EC par le module de communication MCN du véhicule V. En variante, la seconde information i2 peut être déterminée par l'équipement de communication EC à partir, notamment, de la première information i1 et des définitions de trajet transmises à l'équipement de communication EC par le module de communication MCN du véhicule V.

On notera également que dans la seconde étape du procédé, lorsque l'équipement de communication EC reçoit la seconde information i2 d'un véhicule V, il peut stocker cette dernière (i2) en correspondance d'un identifiant de ce véhicule V. Dans ce cas, il peut, par exemple, être plus intéressant pour la personne qui effectue une analyse des données des véhicules de sélectionner pour son analyse les données transmises par le véhicule ayant l'identifiant stocké en correspondance du taux de répétabilité tr le plus faible, car ces données offriront, a priori, la plus grande diversité de situations.

On a schématiquement illustré sur la figure 2 un exemple non limitatif d'algorithme mettant en œuvre un procédé de contrôle selon l'invention.

Dans une sous-étape 10, on enregistre la définition de chaque trajet emprunté par le véhicule V pendant la durée choisie.

Dans une sous-étape 20, on détermine dans le véhicule V un trajet de référence emprunté le plus fréquemment à partir de toutes les définitions de trajet enregistrées pendant la durée choisie.

Dans une sous-étape 30, une fois que la définition du trajet de référence est disponible, on transmet par voie d'ondes, du véhicule V vers l'équipement de communication EC, au moins cette définition du trajet de référence.

Les sous-étapes 10 à 30 constituent ici la première étape du procédé de contrôle selon l'invention.

Dans une sous-étape 40, dès que le véhicule V a emprunté un nouveau trajet, on compare la définition de ce nouveau trajet à la définition du trajet de référence qui a été précédemment déterminée dans la première étape.

En cas de différence entre les définitions du nouveau trajet et du trajet de référence (« non »), on transmet dans une sous-étape 50, par voie d'ondes, du véhicule V vers l'équipement de communication EC, la définition du nouveau trajet avec des données prédéfinies du véhicule V qui ont été enregistrées pendant ce nouveau trajet.

En revanche, en cas d'identité entre les définitions du nouveau trajet et du trajet de référence (« oui »), on peut mettre à jour l'éventuelle seconde information i2 dans une sous-étape 60. Puis, on transmet dans une sous-étape 70, par voie d'ondes, du véhicule V vers l'équipement de communication EC, la première information i1 qui est représentative du fait que le trajet de référence a été une nouvelle fois emprunté, ainsi que l'éventuelle seconde information i2 mise à jour, et on supprime dans le véhicule V les données prédéfinies du véhicule V qui ont été enregistrées pendant le trajet de référence qui a été une nouvelle fois emprunté.

On notera que dans une variante de réalisation, on pourrait transmettre dans une sous-étape 60, par voie d'ondes, du véhicule V vers l'équipement de communication EC, la première information i1, et supprimer dans le véhicule V les données prédéfinies du véhicule V qui ont été enregistrées pendant le trajet de référence qui a été une nouvelle fois emprunté. Puis, dans une sous-étape 70, on pourrait mettre à jour l'éventuelle seconde information i2 dans l'équipement de communication EC, notamment en fonction de la première information i1 reçue du véhicule V.

Les sous-étapes 40 à 70 constituent ici la seconde étape du procédé de contrôle selon l'invention.

## Revendications

1. Procédé de contrôle de la transmission par voie d'ondes de données d'un véhicule (V) à un équipement de communication (EC), comprenant une première étape dans laquelle on détermine dans ledit véhicule (V) pendant une durée choisie un trajet de référence emprunté le plus fréquemment, puis on transmet par voie d'ondes, dudit véhicule (V) vers ledit équipement de communication (EC), au moins une définition dudit trajet de référence, et une seconde étape dans laquelle on compare dans ledit véhicule (V) chaque définition d'un nouveau trajet emprunté par ce dernier (V) à ladite définition du trajet de référence, et en cas de différence on transmet par voie d'ondes, dudit véhicule (V) vers ledit équipement de communication (EC), ladite définition du nouveau trajet avec des données prédéfinies dudit véhicule (V) enregistrées pendant ce nouveau trajet, tandis qu'en cas d'identité on transmet par voie d'ondes, dudit véhicule (V) vers ledit équipement de communication (EC), une première information représentative du fait que ledit trajet de référence a été une nouvelle fois emprunté et on supprime dans ledit véhicule (V) lesdites données prédéfinies dudit véhicule (V) enregistrées pendant ledit trajet de référence une nouvelle fois emprunté.

2. Procédé selon la revendication 1, **caractérisé en ce que** ladite première information signale que ledit trajet de référence a été une nouvelle fois emprunté.

3. Procédé selon la revendication 1 ou 2, **caractérisé en ce que** dans ladite seconde étape on détermine une seconde information représentative d'un taux de répétabilité mis à jour chaque fois que ledit trajet de référence a été de nouveau emprunté.

4. Procédé selon la revendication 3, **caractérisé en ce que** ledit taux de répétabilité est égal à un rapport a/(a + b), où a est égal au produit du nombre de fois où ledit trajet de référence a été emprunté par la longueur de ce dernier, et b est égal à la somme de a et de la somme du nombre de fois où chaque trajet différent dudit trajet de référence a été emprunté par la longueur de ce trajet différent.

5. Procédé selon la revendication 3 ou 4, **caractérisé en ce que** dans ladite seconde étape, lorsque ledit équipement de communication (EC) reçoit ladite seconde information dudit véhicule (V), il stocke cette dernière en correspondance d'un identifiant dudit véhicule (V).

6. Procédé selon l'une des revendications 1 à 5, **caractérisé en ce que** chaque définition d'un trajet comprend une position géographique de début dudit trajet, une position géographique de fin dudit trajet, une longueur dudit trajet, et une vitesse moyenne dudit véhicule (V) sur ledit trajet.

7. Procédé selon l'une des revendications 1 à 6, **caractérisé en ce que** ladite durée choisie est comprise entre deux semaines et quatre semaines.

8. Procédé selon la revendication 7, **caractérisé en ce que** ladite durée choisie est égale à trois semaines.

9. Dispositif (DC) pour contrôler la transmission par voie d'ondes de données d'un véhicule (V) à un équipement de communication (EC), comprenant i) des moyens d'analyse (MA) agencés pour déterminer dans ledit véhicule (V) pendant une durée choisie un trajet de référence emprunté le plus fréquemment, et pour déclencher la transmission par voie d'ondes, dudit véhicule (V) vers ledit équipement de communication (EC), d'au moins une définition dudit trajet de référence, et ii) des moyens de contrôle (MCT) agencés pour comparer dans ledit véhicule (V) chaque définition d'un nouveau trajet emprunté par ce dernier (V) à ladite définition du trajet de référence, et en cas de différence pour déclencher la transmission par voie d'ondes, dudit véhicule (V) vers ledit équipement de communication (EC), d'une définition dudit nouveau trajet avec des données prédéfinies dudit véhicule (V) enregistrées pendant ce nouveau trajet, et en cas d'identité pour déclencher la transmission par voie d'ondes, dudit véhicule (V) vers ledit équipement de communication (EC), d'une première information représentative du fait que ledit trajet de référence a été une nouvelle fois emprunté, et la suppression dans ledit véhicule (V) desdites données prédéfinies dudit véhicule (V) enregistrées pendant ledit trajet de référence une nouvelle fois emprunté.

10. Véhicule (V), **caractérisé en ce qu'**il comprend un dispositif de contrôle (DC) selon la revendication 9.

## Patentansprüche

1. Verfahren zur Steuerung der Übertragung von Daten im Wellenmodus von einem Fahrzeug (V) zu einer Kommunikationseinrichtung (EC), mit einem ersten Schritt, bei dem in dem Fahrzeug (V) für eine gewählte Dauer ein am häufigsten benutzter Referenzpfad bestimmt wird, dann mindestens eine Definition des Referenzpfades im Wellenmodus von dem Fahrzeug (V) zu der Kommunikationseinrichtung (EC) übertragen wird, und einem zweiten Schritt, bei dem jede Definition eines neuen Pfades, der von dem Fahrzeug (V) benutzt wird, in dem Fahrzeug (V) mit der Definition des Referenzpfades verglichen wird, und im Falle eines Unterschieds wird die Definition der neuen Route per Welle vom Fahrzeug (V) an die Kommunikationseinrichtung (EC) übertragen, wobei während dieser neuen Route vordefinierte Daten des Fahrzeugs (V) aufgezeichnet werden, während im Falle der Identität erste Informationen, die dafür repräsentativ sind, dass die Referenzroute wieder zurückgelegt wurde, per Welle vom Fahrzeug (V) an die Kommunikationseinrichtung (EC) übertragen werden und die vordefinierten Daten des Fahrzeugs (V), die während der wieder zurückgelegten Referenzroute aufgezeichnet wurden, im Fahrzeug (V) gelöscht werden.

2. Verfahren nach Anspruch 1, **dadurch gekennzeichnet, dass** die erste Information anzeigt, dass die Referenzroute erneut genommen wurde.

3. Verfahren nach Anspruch 1 oder 2, **dadurch gekennzeichnet, dass** in dem zweiten Schritt eine zweite Information bestimmt wird, die repräsentativ für eine Wiederholbarkeitsrate ist, die jedes Mal aktualisiert wird, wenn der Referenzpfad erneut verwendet wurde.

4. Verfahren nach Anspruch 3, **dadurch gekennzeichnet, dass** die Wiederholbarkeitsrate gleich einem Verhältnis a/(a + b) ist, wobei a gleich dem Produkt der Anzahl von Malen, die der Referenzpfad verwendet wurde, mit der Länge des letzteren ist, und b gleich der Summe von a und der Summe der Anzahl von Malen, die jeder unterschiedliche Pfad des Referenzpfades verwendet wurde, mit der Länge dieses unterschiedlichen Pfades ist.

5. Verfahren nach Anspruch 3 oder 4, **dadurch gekennzeichnet, dass** in dem zweiten Schritt, wenn die Kommunikationseinrichtung (EC) die zweite Information von dem Fahrzeug (V) empfängt, sie diese in Übereinstimmung mit einer Kennung des Fahrzeugs (V) speichert.

6. Verfahren nach einem der Ansprüche 1 bis 5, **dadurch gekennzeichnet, daß** jede Definition eines Pfades eine geographische Position am Anfang des Pfades, eine geographische Position am Ende des Pfades, eine Länge des Pfades und eine Durchschnittsgeschwindigkeit des Fahrzeuges (V) auf dem Pfad umfaßt.

7. Ein Verfahren nach einem der Ansprüche 1 bis 6, **dadurch gekennzeichnet, dass** die gewählte Dauer zwischen zwei Wochen und vier Wochen liegt.

8. Verfahren nach Anspruch 7, **dadurch gekennzeichnet, dass** die gewählte Dauer gleich drei Wochen ist.

9. Vorrichtung (DC) zur Steuerung der Übertragung von Daten über einen Wellenkanal von einem Fahrzeug (V) zu einer Kommunikationsausrüstung (EC), umfassend i) Analysemittel (MA), die so angeordnet sind, dass sie in dem Fahrzeug (V) für eine gewählte Dauer einen am häufigsten verwendeten Referenzpfad bestimmen und die Übertragung über einen Wellenkanal auslösen, von dem Fahrzeug (V) zu der Kommunikationsausrüstung (EC) von mindestens einer Definition des Referenzpfades, und ii) eine Steuereinrichtung (MCT), die angeordnet ist, um in dem Fahrzeug (V) jede Definition eines neuen Pfades, den das letztere (V) nimmt, mit der Definition des Referenzpfades zu vergleichen, und im Falle eines Unterschieds zur Auslösung der Übertragung mittels Wellen, von dem Fahrzeug (V) zu der Kommunikationsausrüstung (EC), einer Definition der neuen Route mit vordefinierten Daten des Fahrzeugs (V), die während dieser neuen Route aufgezeichnet wurden, und im Falle einer Identität zur Auslösung der Übertragung mittels Wellen, von dem Fahrzeug (V) zu der Kommunikationseinrichtung (EC), von ersten Informationen, die dafür repräsentativ sind, dass die Referenzstrecke wieder zurückgelegt wurde, und die Löschung der vordefinierten Daten des Fahrzeugs (V), die während der wieder zurückgelegten Referenzstrecke aufgezeichnet wurden, in dem Fahrzeug (V).

10. Fahrzeug (V), **dadurch gekennzeichnet, dass** es eine Steuervorrichtung (DC) nach Anspruch 9 umfasst.

**Claims**

1. A method of controlling the transmission by wave mode of data from a vehicle (V) to communication equipment (EC), the method comprising a first step in which a reference path used most frequently is determined in said vehicle (V) for a selected duration, then at least one definition of said reference path is transmitted by wave mode from said vehicle (V) to said communication equipment (EC), and a second step in which each definition of a new path used by said vehicle (V) is compared in said vehicle (V) with said definition of the reference path, and in the event of a difference, said definition of the new route is transmitted by waves from said vehicle (V) to said communication equipment (EC) with predefined data from said vehicle (V) recorded during this new route, while in the event of identity, first information representative of the fact that said reference route has been taken again is transmitted by waves from said vehicle (V) to said communication equipment (EC) and said predefined data from said vehicle (V) recorded during said reference route taken again is deleted in said vehicle (V).

2. The method according to claim 1, **characterized in**

**that** said first information indicates that said reference route has been taken again.

3. A method according to claim 1 or 2, **characterised in that** in said second step a second piece of information is determined which is representative of a repeatability rate which is updated each time said reference path has been used again.

4. A method according to claim 3, **characterised in that** said repeatability rate is equal to a ratio a/(a + b), where a is equal to the product of the number of times said reference path has been used by the length of the latter, and b is equal to the sum of a and the sum of the number of times each path different from said reference path has been used by the length of this different path.

5. A method according to claim 3 or 4, **characterised in that** in said second step, when said communication equipment (EC) receives said second information from said vehicle (V), it stores the latter in correspondence with an identifier of said vehicle (V).

6. A method according to one of claims 1 to 5, **characterised in that** each definition of a path comprises a geographical position at the beginning of said path, a geographical position at the end of said path, a length of said path, and an average speed of said vehicle (V) on said path.

7. A method according to one of claims 1 to 6, **characterised in that** said chosen duration is between two weeks and four weeks.

8. A method according to claim 7, **characterised in that** said chosen duration is equal to three weeks.

9. Device (DC) for controlling the transmission by waveform of data from a vehicle (V) to communication equipment (EC), comprising i) analysis means (MA) arranged to determine in the said vehicle (V) during a chosen duration a reference path used most frequently, and to trigger the transmission by waveform, from said vehicle (V) to said communication equipment (EC), of at least one definition of said reference path, and ii) control means (MCT) arranged to compare in said vehicle (V) each definition of a new path taken by the latter (V) with said definition of the reference path, and in the event of a difference to trigger the transmission by way of waves, from said vehicle (V) to said communication equipment (EC), of a definition of said new route with predefined data of said vehicle (V) recorded during this new route, and in the event of identity to trigger the transmission by way of waves, from said vehicle (V) to said communication equipment (EC), of a first information representative of the fact that said reference route has been taken again, and the deletion in said vehicle (V) of said predefined data of said vehicle (V) recorded during said reference route taken again.

10. Vehicle (V), **characterised in that** it comprises a control device (DC) according to claim 9.

MA    MCT

EC

MCN

CA    DC

RC

V

## FIG.1

Enregistrements trajets véhicule pendant durée choisie ⌐ 10

détermination trajet de référence ⌐ 20

transmission définition trajet de référence ⌐ 30

60

mise à jour i2

oui ⟨ trajet = trajet de référence ? ⟩ 40

non

suppression données véhicule et transmission i1 + i2

transmission définition trajet + données véhicule ⌐ 50

70

## FIG.2

## RÉFÉRENCES CITÉES DANS LA DESCRIPTION

**Documents brevets cités dans la description**

- CN 105138779
- US 2013031047 A
- US 2008162034 A